# EUROPEAN PATENT APPLICATION

(11) **EP 2 340 931 A1**
(43) Date of publication of application: **06.07.2011**
(21) Application number: 09814286.2
(22) Date of filing: 15.09.2009
(51) Int. Cl.: B32B 7/02, B32B 27/00

(54) **REINFORCING SHEET FOR RESIN MOLDED ARTICLE, REINFORCED STRUCTURE OF RESIN MOLDED ARTICLE, AND REINFORCING METHOD**

(30) Priority: 22.09.2008 JP 2008242399; 28.07.2009 JP 2009175744
(71) Applicant: Nitto Denko Corporation, Ibaraki-shi Osaka 567-8680 (JP)
(72) Inventor: FUJII, Takahiro, Ibaraki-shi Osaka 567-8680 (JP); MASE, Takuya, Ibaraki-shi Osaka 567-8680 (JP)
(74) Representative: Schwabe - Sandmair - Marx
(86) International application number: PCT/JP2009/004610
(87) International publication number: WO 2010/032441

(57) **Abstract**

A reinforcement sheet for a resin molded product includes a constraining layer and a reinforcing layer laminated onto the constraining layer. The reinforcement sheet for a resin molded product has a bending strength of 3 N or more by a displacement of 1 mm, and has a maximum bending strength of 30 N or more, after the reinforcement sheet for a resin molded product is adhesively bonded to a polypropylene plate having a thickness of 2.0 mm, and heated at 80°C for 10 minutes.

## Description

### TECHNICAL FIELD

The present invention relates to a reinforcement sheet for resin molded products, and a structure and a method for reinforcing the resin molded products. To be specific, the present invention relates to a reinforcement sheet for a resin molded product; a structure for reinforcing a resin molded product in which the reinforcement sheet for a resin molded product is used; and a method for reinforcing a resin molded product in which the reinforcement sheet for a resin molded product is used.

### BACKGROUND ART

Conventionally, resin plates and steel plates used in various industrial products have been processed into a thin sheet to reduce the weight of the product.
Therefore, in an attempt to reinforce the thin sheet resin plate, for example, providing ribs on the inner side of the resin plate is known.
Also, in an attempt to reinforce the thin sheet steel plate, for example, providing a steel plate reinforcement sheet on the inner side of the steel plate is known.

For example, Patent Document 1 below has proposed that a steel plate body of an automobile is reinforced by adhesively bonding a steel plate reinforcement sheet including a constraining layer and a reinforcing layer made of a foam composition to a steel plate body of an automobile, and then the reinforcing layer is foamed and cured by using a high temperature heat (for example, 160 to 200°C) at the time of electrodeposition coating.

### Citation List

### Patent Document

Patent Document 1
   Japanese Unexamined Patent Publication No. 2005-41210

### SUMMARY OF THE INVENTION

### PROBREM TO BE SOLVED BY THE INVENTION

However, the ribs are usually integrally molded with the resin plate, and sink marks are caused on the surface of the resin plate at a portion where the ribs are provided for reinforcement at the time of the molding, degrading the appearance of the resin plate.
Moreover, when reinforcement is done by using the steel plate reinforcement sheet described in the above-described Patent Document 1, the reinforcing layer of the steel plate reinforcement sheet is to be heated to 160 to 200°C and cured. Thus, there is a disadvantage in that the resin plate is deteriorated and melted when such a steel plate reinforcement sheet is adhesively bonded to the resin plate and heated to 160 to 200°C.

An object of the present invention is to provide a reinforcement sheet for a resin molded product; a structure for reinforcing a resin molded product; and a method for reinforcing a resin molded product: the reinforcement sheet is lightweight, and is capable of preventing deterioration or melting of the resin molded product without degrading appearance, while easily reinforcing the resin molded product by heating at a relatively low temperature.

### MEANS FOR SOLVING THE PROBLEM

To achieve the above object, a reinforcement sheet for a resin molded product of the present invention includes a constraining layer and a reinforcing layer laminated on the constraining layer, wherein the reinforcement sheet for a resin molded product has a bending strength of 3 N or more by a displacement of 1 mm, and has a maximum bending strength of 30 N or more, after the reinforcement sheet is adhesively bonded to a polypropylene plate having a thickness of 2.0 mm and heated at 80°C for 10 minutes.

In the reinforcement sheet for a resin molded product of the present invention, it is preferable that the reinforcing layer has a storage modulus at 25°C of 500 kPa or more, and has a storage modulus at 80°C of 400 kPa or less.
It is preferable that the reinforcement sheet for a resin molded product of the present invention has an adhesive strength at room temperature to a polypropylene plate of 0.3 N/25 mm or more as measured in conformity with the 90° peel test of JIS Z0237 at a peeling speed of 300 mm/min.

In the reinforcement sheet for a resin molded product of the present invention, it is preferable that the reinforcing layer is formed from a heat activated adhesive composition.
In the reinforcement sheet for a resin molded product of the present invention, it is preferable that the adhesive composition contains a polymer formed from a monomer including a conjugated diene.
In the reinforcement sheet for a resin molded product of the present invention, it is preferable that the adhesive composition further comprises a tackifier.

In the reinforcement sheet for a resin molded product of the present invention, it is preferable that the mixing ratio of the tackifier is 40 to 200 parts by weight relative to 100 parts by weight of the polymer.
A structure for reinforcing a resin molded product of the present invention includes: a reinforcement sheet for a resin molded product, the reinforcement sheet including a constraining layer and a reinforcing layer laminated onto the constraining layer, and having a bending strength of 3 N or more by a displacement of 1 mm and a maximum bending strength of 30 N or more after adhesively bonding the reinforcement sheet to a polypropylene plate having a thickness of 2.0 mm and heating the reinforcement sheet at 80°C for 10 minutes; and a resin molded product, wherein the resin molded product is reinforced by adhesively bonding the reinforcement sheet for a resin molded product to the resin molded product, and heating the reinforcement sheet and/or the resin molded product to 80°C or more so as to bring the reinforcement sheet for a resin molded product into close contact with the resin molded product.

In the structure for reinforcing a resin molded product of the present invention, it is preferable that the reinforcement sheet for a resin molded product is heated to 80°C or more in advance, and then the reinforcement sheet for a resin molded product is adhesively bonded to the resin molded product.
A method for reinforcing a resin molded product of the present invention includes the steps of: adhesively bonding a reinforcement sheet for a resin molded product to a resin molded product, the reinforcement sheet including a constraining layer and a reinforcing layer laminated on the constraining layer, and having a bending strength of 3 N or more by a displacement of 1 mm and a maximum bending strength of 30 N or more after adhesively bonding the reinforcement sheet to a polypropylene plate having a thickness of 2.0 mm and heating the reinforcement sheet at 80°C for 10 minutes; and heating the reinforcement sheet for a resin molded product and/or the resin molded product to 80°C or more, so as to bring the reinforcement sheet for a resin molded product into close contact with the resin molded product, thereby reinforcing the resin molded product.

In the method for reinforcing a resin molded product of the present invention, it is preferable that in the step of adhesively bonding the reinforcement sheet for a resin molded product to the resin molded product, the reinforcement sheet for a resin molded product is heated to 80°C or more in advance, and then the reinforcement sheet for a resin molded product is adhesively bonded to the resin molded product.

### EFFECTS OF THE INVENTION

With the structure for reinforcing a resin molded product and method for reinforcing a resin molded product of the present invention in which the reinforcement sheet for a resin molded product of the present invention is used, by adhesively bonding the reinforcing layer of the reinforcement sheet for a resin molded product to the resin molded product, and heating the resin molded product and/or the reinforcement sheet for a resin molded product at a relatively low temperature, the reinforcing layer allows strong and close bonding between the constraining layer and the resin molded product, and at the same time, rigidity of the reinforcement sheet for a resin molded product can be improved. Therefore, the reinforcement sheet for a resin molded product allows reliable reinforcement of the resin molded product.

In particular, by adhesively bonding the reinforcement sheet for a resin molded product only to a portion of the resin molded product where reinforcement is desired, and heating them, reinforcement of that particular portion only can be done easily.
Furthermore, with a simple structure including the constraining layer and the reinforcing layer, the reinforcement of the resin molded product can be performed while achieving thin and lightweight products.

### BRIEF DESCRIPTION OF THE DRAWINGS

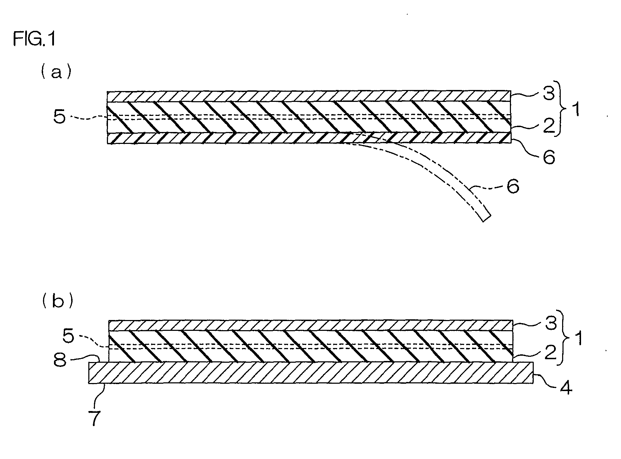

FIG. 1 is a diagram illustrating an embodiment of a method for reinforcing a resin molded product of the present invention in which a reinforcement sheet for a resin molded product of the present invention is adhesively bonded to a resin molded product and heated: (a) illustrating a step of preparing a reinforcement sheet for a resin molded product and peeling of a releasing film, and (b) illustrating a step of adhesively bonding the reinforcement sheet for a resin molded product to a resin molded product, and heating them.

### DESCRIPTION OF EMBODIMENTS

A reinforcement sheet for a resin molded product of the present invention includes a constraining layer and a reinforcing layer laminated on the constraining layer.
The constraining layer is provided to give tenacity to the reinforcing layer after the reinforcing layer is adhesively bonded and heated; is formed into a sheet; is preferably lightweight and thin; and is preferably formed from a material that allows close contact and integration with the reinforcing layer. To be specific, examples of such a material include glass fiber cloth, resin-impregnated glass fiber cloth, synthetic resin nonwoven cloth, metal foil, carbon fiber, and polyester film.

Glass fiber cloth is cloth made of glass fiber, and known glass fiber cloth is used.
The resin-impregnated glass fiber cloth is the glass fiber cloth impregnated with a synthetic resin such as a thermosetting resin or a thermoplastic resin, and known resin-impregnated glass fiber cloth is used. Examples of the thermosetting resin include an epoxy resin, a urethane resin, a melamine resin, and a phenol resin. Examples of the thermoplastic resin include a vinyl acetate resin, an ethylene-vinyl acetate copolymer (EVA), a vinyl chloride resin, and an EVA-vinyl chloride resin copolymer. The thermosetting resin and thermoplastic resin may be used singly or in combination.

Examples of the metal foil include known metal foil such as aluminum foil and steel foil.
Carbon fiber is fiber, mainly composed of carbon, made into cloth, and known carbon fiber is used.
Examples of polyester film include polyethylene terephthalate (PET) film, polyethylene naphthalate (PEN) film, and polybutylene terephthalate (PBT) film. Preferably, PET film is used.

Of the examples of the constraining layer, glass fiber cloth, resin-impregnated glass fiber cloth, or polyester film is preferably used in view of adherence, strength, and costs.
The constraining layer has a thickness of, for example, 0.05 to 2.0 mm, or preferably 0.1 to 1.0 mm.
The reinforcing layer is formed by molding an adhesive composition into a sheet.

The adhesive composition is a heat activated type. To be specific, the adhesive composition exhibits adhesion (pressure-sensitive adhesion), for example, by being heated to 80°C or more.
The adhesive composition contains, as a main component, for example, a polymer formed from a monomer containing conjugated dienes.
Examples of the conjugated dienes include 1,3-butadiene, isoprene (2-methyl-1,3-butadiene), and chloroprene (2-chloro-1,3-butadiene).

As long as the monomer contains the conjugated dienes as an essential component, the monomer also may contain, as an optional component, a copolymerizable monomer that is copolymerizable with conjugated dienes.
Examples of the copolymerizable monomer include non-conjugated dienes such as 1,2-butadiene; olefins such as ethylene, propylene, and isobutylene (2-methylpropene); aromatic vinyl monomers such as styrene; and a cyano group-containing vinyl monomer such as (meth)acrylonitrile.

These copolymerizable monomers may be used alone or in combination of two or more.
Examples of the above-described polymer formed from a monomer include a homopolymer of a monomer composed only of the above-described essential component such as polybutadiene, polyisoprene, and chloroprene polymer (CR); and a copolymer of a monomer composed of the above-described essential component and optional component, such as acrylonitrile-butadiene (random) copolymer, styrene-butadiene-styrene (block) copolymer (SBS), styrene-butadiene (random) copolymer, styrene-isoprene-styrene (block) copolymer (SIS), isobutylene-isoprene (random) copolymer, styrene-ethylene-styrene (block) copolymer (SES), and styrene-ethylene-butylene-styrene (block) copolymer (SEBS).

When the polymer is the above-described copolymer, the mixing ratio of the copolymerizable monomer in the copolymerization is, for example, 10 to 100 parts by weight relative to 100 parts by weight of the conjugated diene.
The polymer has a weight average molecular weight (measured by GPC, polystyrene standard) of, for example, 20000 or more, or preferably 25000 to 100000.
The polymer has a Mooney viscosity of, for example, 20 to 80 (ML1+4, at 100°C), or preferably 30 to 70 (ML1+4, at 100°C).

The polymer has a solution viscosity (25°C) in a 25 wt% solution of toluene of, for example, 100 to 100000 mPa · s, or preferably 500 to 10000 mPa · s.
The polymer has a melt flow rate (MFR) of, for example, 10 g/10 min or less at a temperature of 190°C and with a weight of 2.16 kg, and of, for example, 20 g/10 min or less at a temperature of 200°C and with a weight of 5 kg.

These polymers may be used alone or in combination of two or more.
Of these polymers, preferably, CR, or SBS is used, and more preferably, SBS is used.
The adhesive composition preferably further contains a tackifier.
The tackifier is contained in the adhesive composition for improvement in adherence between the reinforcing layer and the resin molded product, and between the reinforcing layer and the constraining layer, or for improvement in reinforcement properties at the time of reinforcement of the resin molded product.

Examples of the tackifier include rosin resin, terpene resin, coumarone-indene resin, petroleum resin (for example, alicyclic petroleum resin, aliphatic/aromatic copolymer petroleum resin, and aromatic petroleum resin), and phenol resin (for example, terpene-modified phenol resin).
The tackifier has a softening point of, for example, 50 to 150°C, or preferably 50 to 130°C.

The tackifier may be used alone or in combination of two or more.
Of these tackifiers, preferably, petroleum resin, or phenol resin is used.
The mixing ratio of the tackifier is, for example, 40 to 200 parts by weight, or preferably 50 to 170 parts by weight per 100 parts by weight of the polymer.
When the mixing ratio of the tackifier is below the above-described range, there may be a case where adherence between the reinforcing layer, and the resin molded product and constraining layer cannot be improved sufficiently, or reinforcement properties at the time of the resin molded product reinforcement cannot be reinforced sufficiently. When the mixing ratio of the tackifier exceeds the above-described range, the reinforcing layer may become brittle.

In the adhesive composition, in addition to the above-described components, additives such as fillers, antioxidants, softeners (for example, naphthene oils, paraffin oils), thixotropic agents (for example, montmorillonite), lubricants (for example, stearic acids), pigments, antiscorch agents, stabilizers, antioxidants, ultraviolet absorbers, coloring agents, antifungal agents, and fire retardants may be added at an appropriate ratio.

Examples of the filler include magnesium oxide, calcium carbonate (for example, calcium carbonate heavy, calcium carbonate light, and Hakuenka® (colloidal calcium carbonate)), talc, mica, clay, mica powder, bentonite (for example, organic bentonite), silica, alumina, aluminum hydroxide, aluminum silicate, titanium oxide, carbon black (for example, nonconductive carbon black, and acetylene black), aluminum powder, and glass balloon. The filler may be used alone or in combination of two or more. In particular, by using a hollow filler having a small specific gravity, such as glass balloons, a lightweight reinforcing layer can be achieved without using foaming agents.

Examples of the antioxidant include those antioxidants based on amine-ketone, aromatic secondary amine, phenol, benzimidazole (for example, 2-mercaptobenzimidazole), thiourea, and phosphorous acid. The antioxidant may be used alone or in combination of two or more.
The proportion of the additive to be added relative to 100 parts by weight of the polymer is, in particular, in the case of filler, for example, 1 to 200 parts by weight, and in the case of antioxidant, for example, 0.1 to 5 parts by weight.

The adhesive composition can be prepared by blending the above-described components at the above-described mixing ratio, and further to form the reinforcing layer and laminating the reinforcing layer onto the constraining layer, a method (direct forming method) may be used.
In the direct forming method, the above-described components are dissolved or dispersed in a known solvent (for example, toluene) or water at the above-described mixing ratio, thereby preparing a solution or dispersion liquid, and then the obtained solution or dispersion liquid is applied on the surface of the constraining layer, and dried.

Alternatively, a method that may also be used is a transfer method, in which the obtained solution or dispersion liquid is applied on the surface of a releasing film to be described later, dried to form a reinforcing layer, and thereafter, the reinforcing layer is transferred to the surface of the constraining layer.
Another direct forming method may also be used. To prepare the adhesive composition, form a reinforcing layer, and laminate the reinforcing layer onto the surface of the constraining layer, the above-described components (excluding the above-described solvent and water) are directly kneaded, for example, with a mixing roll, a pressure kneader, or an extruder, thereby preparing a kneaded material; the kneaded material is molded into a sheet by, for example, calendering, extrusion molding, or press molding, thereby forming a reinforcing layer; and the reinforcing layer is laminated onto the surface of the constraining layer. Alternatively, a transfer method may be used in which the reinforcing layer thus formed is laminated onto the surface of a releasing film, and thereafter, the reinforcing layer is transferred to the surface of the constraining layer.

The reinforcing layer thus formed has a thickness of, for example, 0.02 to 3.0 mm, or preferably 0.03 to 1.3 mm. The thickness of the reinforcing layer may be set to, for example, 0.2 to 1.0 mm, or preferably 0.5 to 0.9 mm.
In the present invention, the reinforcing layer formed as described above has a storage modulus (G') at 25°C of, for example, 500 kPa or more, or preferably 1500 kPa or more, and usually 200000 kPa or less, or preferably 20000 kPa or less.

When the storage modulus at 25°C is below the above-described range, reinforcement properties may not be improved sufficiently.
The reinforcing layer has a storage modulus (G') measured at 80°C of, for example, 400 kPa or less, or preferably 350 kPa or less, and usually 100 kPa or more.
When the storage modulus at 80°C is not in the above-described range, the resin molded product and the reinforcing layer may not be brought into close contact with each other.

Although the storage modulus (G') at 25°C and 80°C is described in detail in EXAMPLES, the storage modulus (G') is measured with a dynamic viscoelasticity measuring apparatus (measurement conditions: initial strain 0.1%, temperature raising speed 5°C/min, frequency 1 Hz).
The reinforcement sheet for a resin molded product thus obtained has a thickness of, for example, 0.25 to 5.0 mm, or preferably 0.4 to 2.3 mm. The thickness of the reinforcement sheet for a resin molded product also can be set to, for example, 0.3 to 3 mm, or preferably 0.3 to 1.3 mm.

When the thickness of the reinforcement sheet for a resin molded product exceeds the above-described range, it may become difficult to achieve a lightweight reinforcement sheet for a resin molded product, and also production costs may increase. When the thickness of the reinforcement sheet for a resin molded product is below the above-described range, reinforcement properties may not be improved sufficiently.
In the obtained reinforcement sheet for a resin molded product, as necessary, a releasing film (separator) may be adhesively bonded to the front face of the reinforcing layer (surface opposite to the reverse face where the constraining layer is laminated) until the reinforcement sheet is actually used.

Examples of the releasing film include known releasing films such as synthetic resin films including polyethylene film, polypropylene film, and PET film.
The (reinforcing layer of) reinforcement sheet for a resin molded product thus formed and adhesively bonded to a polypropylene plate having a thickness of 2.0 mm has a bending strength by a displacement of 1 mm after heating at 80°C for 10 minutes of, 3 N or more, preferably 3.5 N or more, or more preferably 4 N or more, and usually 20 N or less, or preferably 10 N or less; and has a maximum bending strength after heating at 80°C for 10 minutes of 30 N or more, preferably 35 N or more, or more preferably 40 N or more, and usually 200 N or less, or preferably 80 N or less.

The above bending strength by a displacement of 1 mm, and the maximum bending strength are measured by a three point bending test, in which a polypropylene plate having a thickness of 2.0 mm reinforced by a reinforcement sheet for a resin molded product is trimmed into a size of a length of 150 mm × a width of 25 mm to obtain a test piece, and the test piece is pressed from the polypropylene plate side with a distance between supporting points of 100 mm at a speed of 50 mm/min at the center (lengthwise center and widthwise center) of the test piece, with an indenter having a diameter of 10 mm using a universal testing machine.

When adhesively bonding the reinforcement sheet for a resin molded product to the polypropylene plate, the reinforcing layer is brought into contact with the polypropylene plate.
The bending strength by a displacement of 1 mm is a bending strength (strength) at the time when the indenter is displaced by 1 mm from the start of the pressing, and the maximum bending strength is a maximum bending strength (strength) during the period from the start of the pressing to the test piece fracture.

As long as the bending strength by a displacement of 1 mm and the maximum bending strength are within the above-described range, the resin molded product can be sufficiently reinforced.
The reinforcement sheet for a resin molded product has an adhesive strength to the polypropylene plate in room temperature (25°C) measured by a 90° peel test at a peeling speed of 300 mm/min of, for example, 0.3 N/25 mm or more, preferably 1.0 N/25 mm or more, and usually 40 N/25 mm or less, or preferably 20 N/25 mm or less.

As long as the adhesive strength of the reinforcement sheet for a resin molded product at room temperature is within the above-described range, with a slight exhibition of pressure-sensitive adhesion (slight tackiness) by the reinforcing layer, the reinforcement sheet for a resin molded product can be reliably adhesively bonded to the resin molded product at room temperature before heating.
The reinforcement sheet for a resin molded product has a post-heating adhesive strength to the polypropylene plate measured by a 90° peel test at a peeling speed of 300 mm/min after 10 minutes heating at 80°C of, for example, 0.5 N/25 mm or more, or preferably 0.8 N/25 mm or more, and usually 200 N/25 mm or less, or preferably 20 N/25 mm or less.

The 90° peel test for adhesive strength at room temperature and post-heating adhesive strength is conducted in conformity with the description of "Testing methods of pressure-sensitive adhesive tapes and sheets" of JIS Z0237.
Adhesive strength at room temperature and post-heating adhesive strength of the reinforcement sheet for a resin molded product are substantially the same as adhesive strength at room temperature and post-heating adhesive strength of the reinforcing layer.
The reinforcement sheet for a resin molded product of the present invention is used for reinforcement of a resin molded product.

The resin molded product is not particularly limited, as long as it is a resin molded product that requires reinforcement, and examples thereof include, for example, resin molded products used for various industrial products. Examples of the resin that forms the resin molded product include resins with a low polarity such as olefin resin.
Examples of the olefin resin include polypropylene and polyethylene, and polypropylene is preferably used.

Examples of such resin molded products include, to be specific, bumpers and instrument panels of automobiles. FIG. 1 shows a diagram illustrating an embodiment of a method for reinforcing a resin molded product according to the present invention by adhesively bonding a reinforcement sheet for a resin molded product of the present invention to a resin molded product, and heating them: (a) illustrating a step of preparing a reinforcement sheet for a resin molded product and peeling off a releasing film, and (b) illustrating a step of adhesively bonding the reinforcement sheet for a resin molded product to a resin molded product and heating them.

Next, with reference to FIG. 1, an embodiment of a structure and a method for reinforcing a resin molded product of the present invention is described. In the embodiment, a reinforcement sheet for a resin molded product of the present invention is adhesively bonded to a resin molded product, and then heated for reinforcement.
In a reinforcement sheet 1 for a resin molded product, as shown in FIG. 1 (a), a reinforcing layer 2 is laminated onto a constraining layer 3, and a releasing film 6 is adhered to the front face (surface opposite to the reverse face where the constraining layer 3 is laminated) of the reinforcing layer 2 as necessary.

A resin molded product 4 is, as shown in FIG. 1 (b), used in the above-described various industrial products, and for example, formed into a plate. To be more specific, the resin molded product 4 is formed to include an external face 7 that can be seen from outside, and an internal face 8 that faces inward and cannot be seen from outside.
To adhesively bond the reinforcement sheet 1 for a resin molded product to the resin molded product 4, as indicated by the phantom line in FIG. 1 (a), first, the releasing film 6 is peeled off from the surface of the reinforcing layer 2, and then as shown in FIG. 1 (b), the surface of the reinforcing layer 2 is brought into contact with the internal face 8 of the resin molded product 4, and as necessary, they are pressure bonded. In the pressure bonding of the reinforcement sheet 1 for a resin molded product, for example, a pressure of about 0.15 to 10 MPa is applied.

Furthermore, as necessary, heat can be applied with the pressure (thermocompression bonding). That is, the reinforcement sheet 1 for a resin molded product is heated in advance, and then the heated reinforcement sheet 1 for a resin molded product is adhesively bonded to the resin molded product 4.
As to the conditions for the thermocompression bonding, the temperature is, for example, 80°C or more, preferably 90°C or more, or more preferably 100°C or more, and usually a heatproof temperature or less of the resin molded product 4. To be specific, for example, the temperature is 130°C or less, preferably 30 to 120°C, or more preferably 80 to 110°C.

Thereafter, the resin molded product 4 to which the reinforcement sheet 1 for a resin molded product is adhesively bonded is heated.
The heating temperature is 80°C or more, preferably 90°C or more, or more preferably 100°C or more, and usually a heatproof temperature or less of the resin molded product 4. To be specific, for example, the heating temperature is 130°C or less, preferably 30 to 120°C, or more preferably 80 to 110°C. The heating duration is, for example, 0.5 to 20 min, or preferably 1 to 10 min.

When the heating temperature and the heating duration are below the above-described range, the resin molded product 4 and the constraining layer 3 may not be sufficiently brought into close contact with each other, or, reinforcement properties at the time of reinforcement of the resin molded product 4 may not be improved sufficiently. When the heating temperature and the heating duration exceed the above-described range, the resin molded product 4 may be deteriorated or melted.
The heating of the above-described resin molded product 4 is performed by placing the resin molded product 4 with the reinforcement sheet 1 for a resin molded product adhesively bonded thereto in a drying oven in a drying step in production of the resin molded product 4.

Alternatively, when the drying step is not included in the production of the resin molded product 4, instead of the above-described placement in a drying oven, only the reinforcement sheet 1 for a resin molded product is heated using a partial heating apparatus such as a heat gun.
Alternatively, using the above-described heating apparatus, only the resin molded product 4 can be heated, or both of the reinforcement sheet 1 for a resin molded product and the resin molded product 4 can be heated. When only the resin molded product 4 is heated, the heat of the heating apparatus is conducted (thermal conduction) through the resin molded product 4 to the reinforcement sheet 1 for a resin molded product.

Then, the reinforcement sheet 1 for a resin molded product is adhesively bonded to the resin molded product 4, and the reinforcement sheet 1 for a resin molded product and/or the resin molded product 4 are heated, allowing the reinforcement sheet 1 for a resin molded product to be in close contact with the resin molded product 4, and thereby forming a reinforcement structure in which the resin molded product 4 is reinforced by the reinforcement sheet 1 for a resin molded product.
In the structure and the method for reinforcing the resin molded product 4, by heating at a relatively low temperature as described above, the reinforcing layer 2 allows the constraining layer 3 and the resin molded product 4 to be brought into close contact with each other strongly. At the same time, rigidity of the reinforcement sheet 1 for a resin molded product can be improved. Therefore, the resin molded product 4 can be reliably reinforced by the reinforcement sheet 1 for a resin molded product.

In particular, by adhesively bonding the reinforcement sheet 1 for a resin molded product only to a portion of the resin molded product 4 where reinforcement is desired, and heating them, the reinforcement of only that portion can be easily done. Therefore, an increase in production costs can be prevented.
Furthermore, because the reinforcement sheet 1 for a resin molded product has a simple structure including the constraining layer 3 and the reinforcing layer 2, thin and lightweight products can be achieved, while achieving reinforcement of the resin molded product 4.

Although the reinforcing layer 2 is formed only from a sheet made of an adhesive composition in the description above, for example, as indicated by the broken line in FIG. 1, a nonwoven cloth 5 may be interposed in the middle of the reinforcing layer 2 in the thickness direction.
Examples of the nonwoven cloth 5 include those described above for the synthetic resin nonwoven cloth. The nonwoven cloth 5 has a thickness of, for example, 0.01 to 0.3 mm.

To produce such a reinforcement sheet 1 for a resin molded product, for example, in a direct forming method, a first reinforcing layer is laminated onto the surface of the constraining layer 3, and a nonwoven cloth 5 is laminated onto the surface (surface opposite to the reverse face where the constraining layer 3 is laminated) of the first reinforcing layer, and thereafter, a second reinforcing layer is laminated onto the surface (surface opposite to the reverse face where the first reinforcing layer is laminated) of the nonwoven cloth 5.
In a transfer method, the nonwoven cloth 5 is sandwiched by the first reinforcing layer and the second reinforcing layer, from both of the front face side and the reverse face side of the nonwoven cloth 5. To be specific, first, the first reinforcing layer and the second reinforcing layer is formed on two releasing films 6, respectively, and then, the first reinforcing layer is transferred to the reverse face of the nonwoven cloth 5, and the second reinforcing layer is transferred to the front face of the nonwoven cloth 5.

By interposing the nonwoven cloth 5, the reinforcing layer 2 can be easily formed with a large thickness according to the strength of the resin molded product 4 to be reinforced.

### EXAMPLES

Hereinafter, the present invention is described in further in detail with reference to Examples and Comparative Examples. However, the present invention is not limited to these Examples and Comparative Examples.

### EXAMPLE 1

The components were blended into toluene based on the mixing formulation shown in Table 1 by parts by weight basis, and homogenously dissolved and dispersed, thereby preparing a toluene solution of an adhesive composition.

Then, the prepared toluene solution was applied on the surface of a PET film, and dried at 100°C, thereby forming a reinforcing layer having a thickness of 0.10 mm.
Thereafter, the reinforcing layer was transferred to the surface of a resin-impregnated glass fiber cloth (constraining layer) impregnated with epoxy resin and having a thickness of 0.18 mm and a size of 25 mm × 150 mm, thereby producing a reinforcement sheet for a resin molded product (ref: FIG. 1 (a)).

The reinforcement sheet for a resin molded product had a thickness of 0.18 mm.

### EXAMPLE 2

A toluene solution of an adhesive composition was prepared in the same manner as Example 1 based on the mixing formulation shown in Table 1.
Then, the prepared toluene solution was applied on the surface of two PET films, and dried at 100°C, thereby forming reinforcing layers (a first reinforcing layer having a thickness of 0.035 mm and a second reinforcing layer having a thickness of 0.035 mm) having a thickness of 0.035 mm.

Then, the first reinforcing layer was transferred to the reverse face of a PET-made nonwoven cloth having a thickness of 0.033 mm and a size of 25 mm × 150 mm, and the second reinforcing layer was transferred to the front face of the PET-made nonwoven cloth, thereby sandwiching the nonwoven cloth by the first reinforcing layer and the second reinforcing layer, and forming a reinforcing layer including the nonwoven cloth interposed between the first reinforcing layer and the second reinforcing layer (ref: broken line in FIG. 1 (a)).
Thereafter, one PET film (the PET film to which the second reinforcing layer was laminated) was peeled off, and the reinforcing layer (second reinforcing layer) from which the PET film was peeled off was transferred to the surface of a resin-impregnated glass fiber cloth impregnated with epoxy resin and having a thickness of 0.18 mm and a size of 25 mm × 150 mm, thereby producing a reinforcement sheet for a resin molded product (ref: FIG. 1 (a)).

The reinforcement sheet for a resin molded product had a thickness of 0.18 mm.

### EXAMPLE 3

A reinforcement sheet for a resin molded product was made in the same manner as Example 2, except that a PET film having a thickness of 0.25 mm and a size of 2s mm × 150 mm was used as the constraining layer instead of the resin-impregnated glass fiber cloth.

The reinforcement sheet for a resin molded product had a thickness of 0.25 mm.

### EXAMPLE 4

A reinforcement sheet for a resin molded product was made in the same manner as in Example 1 based on the mixing formulation shown in Table 1, except that a PET film having a thickness of 0.25 mm and a size of 25 mm × 150 mm was used as the constraining layer instead of the resin-impregnated glass fiber cloth.

The reinforcement sheet for a resin molded product had a thickness of 0.35 mm, and the reinforcing layer had a thickness of 0.10 mm.

### EXAMPLES 5 and 6

The components were blended based on the mixing formulation shown in Table 1 by parts by weight bases, and kneaded with a mixing roll, thereby preparing an adhesive composition as a kneaded material.

The prepared adhesive composition was sandwiched by a resin-impregnated glass fiber cloth (constraining layer) impregnated with epoxy resin and having a thickness of 0.18 mm and a size of 25 mm × 150 mm, and a releasing film, and the sandwiched adhesive composition was rolled with a press molding apparatus as is, thereby producing a reinforcement sheet for a resin molded product.
The reinforcement sheet for a resin molded product had a thickness of 0.78 mm, and the reinforcing layer had a thickness of 0.60 mm.

### Comparative Example 1

To 100 parts by weight of an acrylic polymer obtained by polymerizing a monomer component including 100 parts by weight of butyl acrylate, 3 parts by weight of acrylic acid, and 0.1 part by weight of 2-hydroxyethyl acrylate, 40 parts by weight of SUMILITERESIN® PR-12603 (terpene-modified phenol resin, tackifier, melting point: 130°C, manufactured by SUMITOMO BAKELITE CO., LTD.) was blended, and the mixture was mixed homogenously. Then, 120 parts by weight (based on solid content) of a solution of CORONATE® L (isocyanate cross-linking agent, manufactured by Nippon Polyurethane Industry Co., Ltd.) in toluene relative to 100 parts by weight of the acrylic polymer was blended, and the mixture was mixed homogenously, thereby preparing a solution of acrylic adhesive composition.

Then, the prepared solution of acrylic adhesive composition was applied on the surface of a PET film (releasing film), and thereafter, dried at 100°C, thereby forming a reinforcing layer having a thickness of 0.12 mm on the surface of the PET film.
Then, the reinforcing layer was laminated onto the surface of a resin-impregnated glass fiber cloth impregnated with epoxy resin and having a thickness of 0.18 mm and a size of 25 mm × 150 mm, thereby producing a reinforcement sheet for a resin molded product.

The reinforcement sheet for a resin molded product had a thickness of 0.30 mm.

### Comparative Example 2

To 100 parts by weight of bisphenol A epoxy resin (#834, manufactured by Japan Epoxy Resins Co., Ltd.), 5 parts by weight of dicyandiamide (foaming agent), 2 parts by weight of imidazole compound (2MAOK, curing agent, manufactured by Shikoku Chemicals Corporation.), 100 parts by weight of talc, 10 parts by weight of Organite (organic bentonite, manufactured by Nihon Yukinendo Co., Ltd.), and 0.5 parts by weight of carbon black (Asahi #50, nonconductive carbon black, manufactured by Asahi Carbon Co, Ltd.) were blended, and the mixture was kneaded with a mixing roll at 80°C, thereby preparing a kneaded material of an adhesive composition.

Then, the prepared kneaded material of an adhesive composition was press molded, thereby forming a reinforcing layer having a thickness of 0.30 mm and a size of 25 mm × 150 mm.
Thereafter, the reinforcing layer was laminated onto the surface of a resin-impregnated glass fiber cloth impregnated with epoxy resin and having a thickness of 0.18 mm and a size of 25 mm × 150 mm, thereby producing a reinforcement sheet for a resin molded product.

The reinforcement sheet for a resin molded product had a thickness of 0.48 mm.

### Evaluation

The reinforcement sheets for resin molded products obtained in Examples and Comparative Examples were evaluated for bending strength, storage modulus, and adhesive strength as follows. The results are shown in Table 1.

### 1) Bending Strength

The reinforcement sheets for resin molded products of Examples and Comparative Examples were adhesively bonded to a polypropylene plate having a thickness of 2.0 mm, and they were heated at 80°C for 10 minutes. Their bending strength by a displacement of 1 mm and maximum bending strength were measured by a three point bending test.

In the three point bending test, the reinforcement sheet for a resin molded product was adhesively bonded to a polypropylene plate having a thickness of 2.0 mm to obtain a test piece, and the test piece was pressed from the polypropylene plate side at the center of the test piece (lengthwise center and widthwise center) with an indenter having a diameter of 10 mm at a speed of 50 mm/min, using a universal testing machine (manufactured by Minebea Co., Ltd.), and setting a distance between supporting points to 100 mm.
In adhesively bonding the reinforcement sheet for a resin molded product to the polypropylene plate, the reinforcing layer and the polypropylene plate were brought into contact with each other.

### 3) Adhesive Strength (adhesive strength at room temperature and post-heating adhesive strength)

Adhesive strength at room temperature and post-heating adhesive strength after heating at 80°C to the polypropylene plate of only the reinforcing layers formed in Examples and Comparative Examples were measured in conformity with JIS Z0237.

The adhesive strength at room temperature is adhesive strength immediately after being adhesively bonded to the polypropylene plate at room temperature (25°C).

### 2) Storage Modulus (G')

Storage modulus (G') at 25°C and 80°C of only the reinforcing layers formed in Examples and Comparative Examples were measured using a dynamic viscoelasticity measuring apparatus.

Measurement conditions are shown below.
Dynamic viscoelasticity measuring apparatus: ARES, manufactured by Rheometric Scientific Inc.
Jig used: parallel plate
Sample thickness: about 1.0 mm
Diameter: 7.9 mm
Measurement conditions: initial strain 0.1 %
Temperature raising speed: 5°C/min
Frequency: 1Hz

### 3) Adhesive Strength (adhesive strength at room temperature and post-heating adhesive strength)

Adhesive strength to the polypropylene plate of only the reinforcing layers formed in Examples and Comparative Examples was measured in conformity with JIS Z0237, i.e., adhesive strength at room temperature and post-heating adhesive strength after heating at 80°C.

The adhesive strength at room temperature is adhesive strength immediately after being adhesively bonded to the polypropylene plate at room temperature (25°C).

**Table 1**

| Example and Comp. Ex. | | | | Ex. 1 | Ex. 2 | Ex. 3 | Ex. 4 | Ex. 5 | Ex. 6 | Comp. Ex.1 | Comp. Ex.2 |
|---|---|---|---|---|---|---|---|---|---|---|---|
| | Polymer | SBS | T420 | - | 100 | 100 | 100 | 50 | - | - | - |
| | | | T432 | - | - | - | - | 50 | 50 | - | - |
| | | | A | - | - | - | - | - | 50 | - | - |
| | | CR | Showa Denko Chloroprene AF | 100 | - | - | - | - | - | - | - |
| | | Acrylic Polymer | | - | - | - | - | - | - | 100 | - |
| | | Bisphenol A epoxy resin | | - | - | - | - | - | - | - | 100 |
| Reinforcing Layer | Tackifier | Alicyclic Petroleum Resin | ARKON M115 | - | 100 | 100 | 100 | - | - | - | - |
| | | Terpene-Modified Phenol Resin | SUMILITERESIN® | 60 | - | - | - | - | - | 40 | - |
| | | Aliphatic/Aromatic Copolymer Petroleum Resin | Petrotack 90HM | - | - | - | - | 100 | 100 | - | - |
| | Filler | Magnesium Oxide | Kyowamag 150 | - | - | - | - | - | - | - | - |
| | | Talc | | - | - | - | - | - | - | - | 100 |
| | | Organic Bentonite | Organite | - | - | - | - | - | - | - | 10 |
| | | Carbon Black | Asahi #50 | - | - | - | - | 3 | 3 | - | 0.5 |
| | | Calcium Carbonate | Calcium Carbonate Heavy | - | - | - | - | 100 | 100 | - | - |
| | Antioxidants | MBI | NOCRAC MB | 1 | 1 | 1 | 1 | 1 | 1 | - | - |
| | PET-made nonwoven cloth | Presence or Absence | | Absent | Present | Present | Absent | Absent | Absent | Absent | Absent |
| | | Thickness [mm] | | - | 0.033 | 0.033 | - | - | - | - | - |
| | Thickness [mm] | | | 0.10 | 0.035^{*2} | 0.035^{*2} | 0.10 | 0.60 | 0.60 | 0.12 | 0.30 |
| Constraining Layer | Type | | | Resin-impregnated Glass | | PET film | | Resin-impregnated Glass Fiber | | | |
| | Thickness [mm] | | | 0.18 | 0.18 | 0.25 | 0.25 | 0.18 | 0.18 | 0.18 | 0.18 |
| Reinforcement Sheet for Resin Molded Product | Thickness [mm] | | | 0.28 | 0.28 | 0.35 | 0.35 | 0.78 | 0.78 | 0.30 | 0.48 |
| | Bending Strength | Strength by displacement of 1 mm [N] | After heating at 80°C | 3.4 | 4.5 | 3.5 | 3.5 | 4.8 | 5.9 | 2.6 | 2.7 |
| | | Maximum bending stregth[N] | | 33.5 | 42.8 | 44.1 | 44.1 | 46.0 | 62.7 | 29.8 | 21.5 |
| Evaluation | Storage Modulus (G')[kPa] <reinforcing layer> | | 25°C (measurement temperature) | 544.6 | 1518.5 | 1518.5 | 1518.5 | 733.7 | 1950.9 | 129.5 | 270 |
| | | | 80°C (measurement temperature) | 194.9 | 302.4 | 302.4 | 302.4 | 362.5 | 335.1 | 35 | 46 |
| | Adhesive Strength*¹ [N/25 mm] | Strength at Room Temperature | 25°C | 0.3 | 4.0 | 4.0 | 4.0 | 9.5 | 13.6 | 5.1 | 13.0 |
| | | Adhesive Post-Heating Adhesive Strength | After heating at 80°C | 0.8 | 14.2 | 142 | 14.2 | 14.7 | 21.2 | 14.5 | 14.0 |

| | | | | | | | | | | | |
|---|---|---|---|---|---|---|---|---|---|---|---|
| Adhesive Strength*¹:90° peel test[N/25 mm] 0.035 mm*²:Thickness of each of the first reinforcing layer and the second reinforcing layer | | | | | | | | | | | |

Details of the components shown in Table 1 are shown below.
T420: trade name "ASAPRENE^{™} T420", styrene-butadiene-styrene copolymer, styrene content 30%, 25% toluene solution viscosity (25°C) 1200 mPa · s, MFR (190°C, 2.16 kg): 1.1 g/10 min, MFR (200°C, 5 kg): 6.5 g/10 min, manufactured by Asahi Kasei Chemicals Corporation
T432: trade name "ASAPRENE^{™} T432", styrene-butadiene-styrene copolymer, styrene content 30%, 25% toluene solution viscosity (25°C) 3100 mPa · s, MFR (190°C, 2.16 kg): 0 g/10 min, MFR (200°C, 5 kg): below 1 g/10 min, manufactured by Asahi Kasei Chemicals Corporation
A: trade name "TUFPRENE^{™} A", styrene-butadiene-styrene copolymer, styrene content 40%, 25% toluene solution viscosity (25°C) 650 mPa · s, MFR (190°C, 2.16 kg): 2.6 g/10 min, MFR (200°C, 5 kg): 13 g/10 min, manufactured by Asahi Kasei Chemicals Corporation
Showa Denko Chloroprene AF: trade name, chloroprene polymer, Mooney viscosity: 50 (ML1+4, at 100°C), manufactured by Showa Denko K.K.
ARKON M-115: trade name, softening point (ring-and-ball method) 115°C, manufactured by Arakawa Chemical Industries, Ltd.
SUMILITERESIN®: trade name "SUMILITERESIN® PR-12603", melting point: 130°C, manufactured by SUMITOMO BAKELITE CO., LTD.
Petrotack 90HM: trade name, softening point 88°C, manufactured by Tosoh Corporation
Kyowamag 150: trade name, average particle size 5.6 µm, manufactured by Kyowa Chemical Industry Co., Ltd.
Organite: trade name, manufactured by Nihon Yukinendo Co., Ltd.
Asahi #50: trade name, nonconductive carbon black, manufactured by Asahi Carbon Co, Ltd.
NOCRAC MB: trade name, 2-mercaptobenzimidazole, manufactured by OUCHI SHINKO CHEMICAL INDUSTRIAL CO., LTD.
While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICABILITY

A reinforcement sheet for a resin molded product of the present invention is suitably used for reinforcement of a resin molded product such as bumpers and instrument panels of automobiles.

## Claims

1. A reinforcement sheet for a resin molded product, the reinforcement sheet comprising a constraining layer, and a reinforcing layer laminated onto the constraining layer,
wherein the reinforcement sheet for a resin molded product has a bending strength of 3 N or more by a displacement of 1 mm, and has a maximum bending strength of 30 N or more, after the reinforcement sheet is adhesively bonded to a polypropylene plate having a thickness of 2.0 mm and heated at 80°C for 10 min.

2. The reinforcement sheet for a resin molded product according to Claim 1, wherein the reinforcing layer has a storage modulus at 25°C of 500 kPa or more, and has a storage modulus at 80°C of 400 kPa or less.

3. The reinforcement sheet for a resin molded product according to Claim 1, wherein the reinforcement sheet has an adhesive strength at room temperature to a polypropylene plate of 0.3 N/25 mm or more, the adhesive strength measured in conformity with the 90° peel test of JIS Z0237 at a peeling speed of 300 mm/min.

4. The reinforcement sheet for a resin molded product according to Claim 1, wherein the reinforcing layer is formed from a heat activated adhesive composition.

5. The reinforcement sheet for a resin molded product according to Claim 4, wherein the adhesive composition contains a polymer formed from a monomer including a conjugated diene.

6. The reinforcement sheet for a resin molded product according to Claim 5, wherein the adhesive composition further comprises a tackifier.

7. The reinforcement sheet for a resin molded product according to Claim 6, wherein the mixing ratio of the tackifier is 40 to 200 parts by weight relative to 100 parts by weight of the polymer.

8. A structure for reinforcing a resin molded product comprising:
a reinforcement sheet for a resin molded product,
the reinforcement sheet including a constraining layer and a reinforcing layer laminated onto the constraining layer, and having a bending strength of 3 N or more by a displacement of 1 mm and a maximum bending strength of 30 N or more after adhesively bonding the reinforcement sheet to a polypropylene plate having a thickness of 2.0 mm and heating the reinforcement sheet at 80°C for 10 minutes; and
a resin molded product,
wherein the resin molded product is reinforced by adhesively bonding the reinforcement sheet for a resin molded product to the resin molded product, and heating the reinforcement sheet and/or the resin molded product to 80°C or more so as to bring the reinforcement sheet for a resin molded product into close contact with the resin molded product.

9. The structure for reinforcing a resin molded product according to Claim 8, wherein the reinforcement sheet for a resin molded product is heated to 80°C or more in advance, and then the reinforcement sheet for a resin molded product is adhesively bonded to the resin molded product.

10. A method for reinforcing a resin molded product, the method comprising the steps of:
adhesively bonding a reinforcement sheet for a resin molded product to a resin molded product,
the reinforcement sheet including a constraining layer and a reinforcing layer laminated on the constraining layer, and having a bending strength of 3 N or more by a displacement of 1 mm and a maximum bending strength of 30 N or more after adhesively bonding the reinforcement sheet to a polypropylene plate having a thickness of 2.0 mm and heating the reinforcement sheet at 80°C for 10 minutes; and
heating the reinforcement sheet for a resin molded product and/or the resin molded product to 80°C or more, so as to bring the reinforcement sheet for a resin molded product into close contact with the resin molded product, thereby reinforcing the resin molded product.

11. The method for reinforcing a resin molded product according to Claim 10, wherein in the step of adhesively bonding the reinforcement sheet for a resin molded product to the resin molded product, the reinforcement sheet for a resin molded product is heated to 80°C or more in advance, and then the reinforcement sheet for a resin molded product is adhesively bonded to the resin molded product.
